# EUROPÄISCHE PATENTSCHRIFT

(11) **EP 2 893 251 B1**
(45) Veröffentlichungstag und Bekanntmachung des Hinweises auf die Patenterteilung: **11.03.2020**
(21) Anmeldenummer: 13759170.7
(22) Anmeldetag: 04.09.2013
(51) Int. Cl.: F21V 8/00

(54) **LICHTLEITEREINHEIT FÜR EIN BELEUCHTUNGSSYSTEM**
LIGHT GUIDE UNIT FOR A LIGHTING SYSTEM
UNITÉ DE GUIDE DE LUMIÈRE POUR UN SYSTÈME D'ÉCLAIRAGE

(30) Priorität: 04.09.2012 DE 102012215640
(43) Veröffentlichungstag der Anmeldung: 15.07.2015
(73) Patentinhaber: Zumtobel Lighting GmbH, 6850 Dornbirn (AT)
(72) Erfinder: GASSNER, Patrik, A-6722 St. Gerold (AT); SCHWAIGHOFER, Andreas, A-6850 Dornbirn (AT)
(74) Vertreter: Thun, Clemens
(86) Internationale Anmeldenummer: PCT/EP2013/068209
(87) Internationale Veröffentlichungsnummer: WO 2014/037357

(56) Entgegenhaltungen:
- DE-A1-102008 016 764
- DE-U1-202012 000 567
- JP-A- 2002 251 907
- US-A- 6 011 602
- US-A1- 2004 085 749
- US-B1- 6 264 343

## Beschreibung

Die vorliegende Erfindung betrifft ein Beleuchtungssystem zur gleichmäßigen Lichtabgabe mit einer Lichtleitereinheit. Die Lichtleitereinheit umfasst eine Lichtleiterplatte mit speziellen Strukturen zum Auskoppeln von Licht. Das Beleuchtungssystem umfasst des Weiteren eine Entblendungseinheit mit kollimierenden Elementen, die den Strukturen zugeordnet sind und das ausgekoppelte Licht entblenden.

Aus dem Stand der Technik ist ein Beleuchtungssystem zur gleichmäßigen Auskopplung von Licht mit einer laserstrukturierten Lichtleiterplatte in Kombination mit einer Mikropyramidenstruktur bekannt. Die Mikropyramidenstruktur ist dazu geeignet, Leuchtdichten von Licht, das unter flachen Winkeln aus dem Beleuchtungssystem austritt, zu reduzieren, d.h. das Licht zu entblenden. Optional können auch Leuchtdichten von Licht, das unter steilen Winkeln austritt, reduziert werden. Der Nachteil eines solchen Beleuchtungssystems mit einer Mikropyramidenstrukturoptik ist, dass die erzeugbare Lichtmenge begrenzt ist.

Aus dem Stand der Technik ist ferner ein Beleuchtungssystem mit einer Lichtleiterplatte bekannt, auf der eine Prismenplatte mit Pyramidenstümpfen als Entblendungselement mittels einer optischen Kopplung angebracht ist. Die Lichtleiterplatte dient dazu, aus dem Beleuchtungssystem austretendes Licht zu entblenden. Nachteilig ist wiederum, dass die erzeugbare Lichtmenge begrenzt ist.

US 5,396,350 beschreibt eine Vorrichtung, die eine Anordnung von Mikroprismen ausnutzt. Die Mikroprismen sind auf einer Oberfläche eines Wellenleiters angeordnet und weisen gegenüber der Oberfläche des Wellenleiters geneigte Seitenflächen auf.

US 5,555,109 beschreibt ein Beleuchtungssystem, das eine Anordnung aus Mikroprismen ausnutzt. Die Mikroprismen sind auf einem Wellenleiter angeordnet und weisen geneigte Seitenwände auf. Zudem kann eine Anordnung von Mikrolinsen über den Mikroprismen angeordnet sein, um das aus den Mikroprismen austretende Licht zu kollimieren.

Aus der US 6,6011,602 ist ein Beleuchtungssystem mit einer Lichtleitereinheit bekannt, wobei an der zur Lichtabgabe der Lichtleitereinheit vorgesehenen Flachseite Strukturen ausgebildet sind. Auch aus der US 2004/0085749 A1 ist ein Beleuchtungssystem mit einer Lichtleitereinheit bekannt.

Ferner zeigt die JP 2002-251907 A ein optisches System, welches mehrere LED aufweist, denen jeweils ein topfartiger Refelktor zugeordnet ist, wobei die LED dann durch eine Öffnung im Bodenbereich des Reflektors in diesen hineinragt.

Die vorliegende Erfindung stellt sich die Aufgabe die Nachteile des bekannten Standes der Technik zu verbessern. Insbesondere ist es die Aufgabe der vorliegenden Erfindung, ein Beleuchtungssystem zu entwickeln, mit dem höhere Lichtmengen erzeugt werden können. Ferner soll es möglich sein, effektiv und leicht die Verteilungscharakteristik des erzeugten Lichts zu beeinflussen.

Die Aufgabe der vorliegenden Erfindung wird durch ein Beleuchtungssystem gemäß dem unabhängigen Anspruch gelöst. Die abhängigen Ansprüche bilden den Kerngedanken der vorliegenden Erfindung vorteilhaft weiter.

Die vorliegende Erfindung betrifft ein Beleuchtungssystem zur gleichmäßigen Lichtabgabe mit einer Lichtleitereinheit, die eine Lichtleiterplatte und mehrere auf der Lichtleiterplatte angeordnete Strukturen zum Auskoppeln von Licht aus der Lichtleiterplatte umfasst, wobei die Strukturen quaderartig und/oder zylinderartig und derart gestaltet sind, dass Licht nur an Flanken der Strukturen austreten kann. Ferner umfasst das Beleuchtungssystem wenigstens eine an einer Seitenfläche der Lichtleiterplatte angebrachte Lichteinheit zum Einleiten von Licht in die Lichtleiterplatte und eine Entblendungseinheit, die an der Lichtleitereinheit angebracht ist und auf der mehrere kollimierende Elemente angeordnet sind, wobei jeder Struktur ein kollimierendes Element zugeordnet ist und wobei jedes kollimierende Element dazu ausgelegt ist, Licht, das an den Flanken der ihm zugeordneten Struktur austritt, durch Totalreflexion umzulenken, so dass es aus dem Beleuchtungssystem austritt.

Jedes kollimierende Element weist hierbei eine Öffnung auf; und jede Struktur ragt in das ihr zugeordnete kollimierende Element hinein, wobei die kollimierenden Elemente die äußere Form von oben abgeschnittenen Kegeln mit kreisförmiger Grundfläche oder oben abgeschnittenen Pyramiden mit rechteckiger Grundfläche haben, wobei auf der durch den Abschnitt entstehenden Oberfläche eines jeden kollimierenden Elements eine Öffnung zum vollständigen Aufnehmen der Strukturen ausgebildet ist.

Die Lichtleitereinheit ist derart gestaltet, dass Licht, durch die Lichtleiterplatte aufgrund von Totalreflexion geleitet wird und daher nicht an Oberflächen der Lichtleiterplatte austritt. In die Strukturen kann das Licht allerdings eintreten und durch deren Flanken aus der Lichtleiterplatte hinausgeleitet werden. Die Strukturen können beispielweise quaderförmig, zylinderförmig oder würfelförmig sein. Es kann auch eine Kombination von Strukturen verschiedener Arten oder Formen verwendet werden. Das aus den Flanken (d.h. den seitlichen Wänden) der Strukturen austretende Licht wird anschließend durch die Entblendungseinheit entblendet. Die Lichtleitereinheit ist dafür in dem Beleuchtungssystem verbaut, welches die Entblendungseinheit aufweist, um das aus der Lichtleitereinheit austretende Licht zu entblenden. Durch die speziellen Strukturen kann die von einem solchen Beleuchtungssystem erzeugte Lichtmenge erhöht werden.

Vorzugsweise ist jede Struktur derart gestaltet, dass Licht, das auf eine Bodenfläche der Struktur trifft, reflektiert wird.

Die Strukturen sind dazu vorzugsweise einteilig mit der Lichtleiterplatte ausgebildet. An der Bodenfläche der Strukturen findet dann genau wie an den Oberflächen der Lichtleiterplatte eine Totalreflexion des Lichts statt. Die Strukturen könnten aber auch von der Lichtleiterplatte separate Elemente sein. Die Bodenfläche könnte dann beispielweise mit einer reflektierenden Schicht versehen sein. Dadurch, dass Licht von den Bodenflächen reflektiert wird, wird es teilweise in die Lichtleiterplatte zurückreflektiert und kann zu einem späteren Zeitpunkt an einer Flanke einer anderen oder derselben Struktur austreten. Damit sind insgesamt höhere Lichtmengen im Vergleich zu den bekannten Lösungen realisierbar.

Vorzugsweise ist jede Struktur derart gestaltet, dass ein erster Winkel zwischen der Flanke der Struktur und einer Oberfläche der Lichtleiterplatte etwa 90° beträgt, und ein zweiter Winkel zwischen der Flanke der Struktur und der Bodenfläche der Struktur etwa 90° beträgt.

Durch die rechten Winkel werden nicht kontrollierbare Lichtstahlen minimiert. Die Lichtmenge, die in dem Beleuchtungssystem durch die Entblendungseinheit normkonform entblendet werden kann, erhöht sich dadurch.

Vorzugsweise ist eine Seitenfläche der Lichtleiterplatte zum Einleiten von Licht in die Lichtleiterplatte ausgelegt und nimmt eine Höhe und/oder eine Grundfläche der Strukturen mit zunehmendem Abstand der Strukturen von der Seitenfläche zu.

Durch die unterschiedlichen Grundflächen der Strukturen bzw. die unterschiedlichen Höhen der Strukturen wird die Lichtmenge beeinflusst, welche in die jeweiligen Strukturen eintreten und an deren Flanken austreten kann. Dadurch wird eine asymmetrische Lichtauskopplung aus der Lichtleiterplatte erreicht, die dem Lichtabfall innerhalb der Lichtleiterplatte entgegenwirkt. Die Lichtabgabe der Lichtleitereinheit kann also nahe der Seite, an der Licht eingeleitet wird, sowie entfernt von dieser Seite gleich eingestellt werden.

Mehr bevorzugt sind zwei gegenüberliegende Seitenflächen der Lichtleiterplatte zum Einleiten von Licht in die Lichtleiterplatte ausgelegt, und ist eine Höhe und/oder eine Grundfläche von Strukturen, die angrenzend an eine der Seitenflächen angeordnet sind, kleiner als eine Höhe und/oder eine Grundfläche von Strukturen, die in der Mitte zwischen den beiden Seitenflächen angeordnet sind.

Vorzugsweise wird Licht deshalb an zwei gegenüberliegenden Seitenflächen eingeleitet, um die Lichtmenge zu erhöhen. Wiederum wird eine asymmetrische Lichtauskopplung durch die unterschiedlichen Grundflächen und/oder Höhen der Strukturen erreicht, die dem Lichtabfall innerhalb der Lichtleiterplatte von den Seitenflächen hin zur Symmetriemitte der Lichtleiterplatte entgegenwirkt. Die Lichtabgabe aus der Lichtleitereinheit kann somit über ihre gesamte Länge gleichmäßig eingestellt werden.

Vorzugsweise nehmen die Höhe und/oder die Grundfläche der Strukturen mit zunehmendem Abstand der Strukturen von einer der Seitenflächen bis zur Mitte zwischen den beiden Seitenflächen hin zu.

Die Zunahme kann stetig, kontinuierlich oder auch sprunghaft erfolgen. Idealerweise ist die Zunahme der Höhe und/oder der Grundfläche der Strukturen genau dem Lichtabfall innerhalb der Lichtleiterplatte von den Seitenflächen zur Mitte hin angepasst.

Ein kollimierendes Element der Entblendungseinheit kollimiert und entblendet das Licht und leitet es aus dem Beleuchtungssystem hinaus. Der Grad der Kollimation ist der geforderten Lichtverteilungscharakteristik des Beleuchtungssystems, bspw. einer geforderten Leuchtdichteverteilung, angepasst. Erfindungsgemäß haben die kollimierenden Elemente die äußere Form von oben abgeschnittenen kegelartigen Strukturen mit kreisförmiger Grundfläche oder oben abgeschnittenen pyramidenartigen Strukturen mit rechteckiger oder quadratischer Grundfläche. Die Seitenflächen der kollimierenden Elemente können dabei plan sein, wie bei Kegeln oder Pyramiden. Vorteilhafterweise können die Seitenflächen aber auch gewölbt sein, bevorzugt nach außen gewölbt, um eine gewünschte lichttechnische Beeinflussung zu erzielen. Beispielweise kann durch eine gezielt festgelegte Wölbung eine gewünschte Leuchtdichteverteilung erhalten werden. Auf der Schnittfläche, die den Strukturen zugewandt ist, ist eine Öffnung zum vollständigen Aufnehmen der Strukturen angeordnet. Die Öffnungen können wie die Grundfläche kreisförmig, rechteckig oder quadratisch sein. Vorzugsweise stimmen Grundfläche und Öffnung in ihrer Form überein, können aber auch verschieden sein. Die Kombination aus den quaderartigen, würfelartigen und/oder zylinderartigen Strukturen und den jeweils zugeordneten kollimierenden Elementen ermöglicht es, die Lichtmenge des erfindungsgemäßen Beleuchtungssystems im Vergleich mit ähnlichen herkömmlichen Beleuchtungssystemen zu erhöhen. Das an den Flanken der Strukturen austretende Licht wird durch Totalreflexion in den kollimierenden Elementen umgelenkt und dadurch schließlich aus dem Beleuchtungssystem ausgegeben. Die kollimierenden Elemente sind derart geformt, dass das austretende Licht entblendet ist und vorgegebene lichttechnische Kriterien erfüllt (beispielweise Lichtverteilung, Unified Glare Rating (UGR) und/oder Tauglichkeit für Bildschirm-Arbeitsplatz (BAP)). Vorzugsweise weist jedes kollimierende Element eine Öffnung auf und ragt jede Struktur in das ihr zugeordnete kollimierende Element hinein.

Dadurch wird eine effiziente Kopplung des Lichts, das aus den Strukturen austritt, in die kollimierende Elemente hinein ermöglicht.

Die Lichtleitereinheit und das Beleuchtungssystem gemäß der vorliegenden Erfindung haben den Vorteil, dass höhere Lichtmengen im Vergleich zu bekannten Beleuchtungssystemen zur gleichmäßigen Lichtabgabe möglich sind. Außerdem kann eine effektivere und leichtere Einflussnahme auf die Charakteristik der Verteilung des ausgegebenen Lichts vorgenommen werden.

Die vorliegende Erfindung wird im Folgenden mit Bezug auf die angehängten Figuren detaillierter beschrieben.
Figur 1 zeigt in Explosionsansicht einen Querschnitt durch ein Beleuchtungssystem der vorliegenden Erfindung.
Figur 2 zeigt in Explosionsansicht eine perspektivische Darstellung eines Beleuchtungssystems der vorliegenden Erfindung.
Figur 3 zeigt einen Querschnitt durch ein Beleuchtungssystem der vorliegenden Erfindung.
Figur 4 zeigt eine perspektivische Darstellung eines Beleuchtungssystems der vorliegenden Erfindung.
Figur 5 zeigt einen Querschnitt durch eine Lichtleitereinheit der vorliegenden Erfindung.
Figur 6 zeigt einen Querschnitt durch eine Lichtleitereinheit der vorliegenden Erfindung.

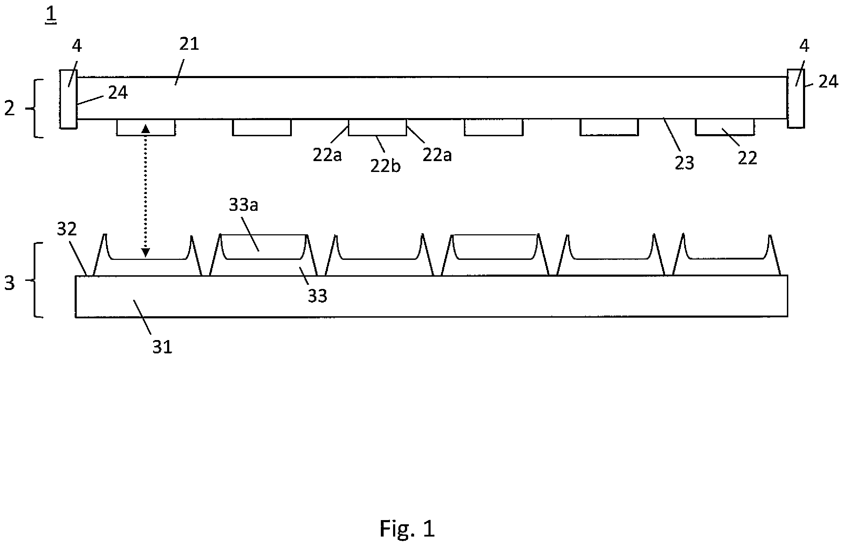

Figur 1 zeigt einen Querschnitt durch ein Beleuchtungssystem 1 der vorliegenden Erfindung. Das Beleuchtungssystem 1 besteht aus einer Lichtleitereinheit 2 und einer Entblendungseinheit 3. In Figur 1 sind die Lichtleitereinheit 2 und die Entblendungseinheit 3 in einer Explosionsansicht dargestellt. Im tatsächlichen Beleuchtungssystem 1 sind diese beiden Einheiten 2 und 3 aber aneinander angebracht. Dies kann durch geeignete Verbindungstechniken wie Kleben oder Schrauben oder ähnliche Techniken realisiert werden.

Die Lichtleitereinheit 2 weist eine Lichtleiterplatte 21 auf. Die Lichtleiterplatte 21 ist bspw. ein herkömmlicher Lichtwellenleiter, in dem Licht zumindest in einem Wellenlängenbereich von etwa 400 bis etwa 700nm an den Innenflächen eine Totalreflexion erfährt und somit entlang der Ausdehnungsrichtung der Lichtleiterplatte 21 fortgeleitet werden kann. Die Lichtleiterplatte 21 kann dazu bspw. aus Glas, Acryl, Polykarbonaten oder Polyester hergestellt sein. Die Lichtleiterplatte 21 weist zwei gegenüberliegende Seitenflächen 24 auf, an denen Licht in die Lichtleiterplatte 2 eingeleitet werden kann. Das Licht kann an einer oder an beiden der Seitenflächen 24 von wenigstens einer daran angebrachten Lichteinheit 4 eingekoppelt werden. Jede Lichteinheit 4 kann bspw. eine LED, eine OLED oder ein anderes Leuchtmittel enthalten.

Die Lichtleitereinheit 2 weist ferner Strukturen 22 auf, die auf einer äußeren Oberfläche 23 der Lichtleiterplatte 21 angeordnet sind. Licht kann aufgrund der Totalreflexion an der Oberfläche 23 (genauer gesagt der Innenfläche, die der Oberfläche 23 entspricht) der Lichtleiterplatte 21 nicht zwischen den Strukturen 22 austreten, kann aber durch die Strukturen 22 aus der Lichtleiterplatte 21 ausgekoppelt werden.

Die Strukturen 22 und die Lichtleiterplatte 21 sind vorzugsweise einteilig gefertigt. Die Strukturen 22 können alternativ mit der Lichtleiterplatte 21 optisch gekoppelt, bspw. daran angeklebt sein. Die Lichtleiterplatte 21 kann dann lichtdurchlässige Abschnitte oberhalb jeder Struktur 22 aufweisen. Die Strukturen 22 können aus demselben Material wie die Lichtleiterplatte 21 sein. Alternativ können die Strukturen 22 aus einem Material gefertigt sein, das transparent ist, bspw. einem Polymer, wobei die Bodenfläche 22b mit einer reflektierenden Schicht versehen ist. Die Strukturen 22 können auch aus lichtdurchlässigen und reflektierenden Teilen zusammengesetzt sein.

Die Strukturen 22 auf der Oberfläche 23 der Lichtleiterplatte 21 sind vorzugsweise quaderartig, würfelartig oder zylinderartig. Es können beispielweise quaderförmige, würfelförmige und/oder zylinderförmige Strukturen auf einer Lichtleiterplatte 21 angeordnet sein und auch miteinander kombiniert werden. Licht, das aus der Lichtleiterplatte 21 in eine der Strukturen 22 eintritt, wird aus der Lichtleitereinheit 2 ausgegeben, falls es auf eine Seitenwand, d.h. eine Flanke 22a einer Struktur 22 trifft. Trifft das Licht hingegen auf eine Bodenfläche 22b einer Struktur 22, so wird das Licht reflektiert, vorzugsweise derart, dass es in die Lichtleiterplatte 21 geleitet wird. Das in der Lichtleiterplatte 21 verbleibende Licht kann zu einem späteren Zeitpunkt durch eine Struktur 22 austreten, falls es auf deren Flanke 22a trifft. Sind die Strukturen 22 einteilig mit der Lichtleiterplatte 21 ausgebildet, so erfährt das Licht eine Totalreflexion an den Bodenflächen 22b, da diese vorzugsweise wie in Fig. 1 gezeigt parallel zur Oberfläche 23 der Lichtleiterplatte 21 sind.

Die Entblendungseinheit 3 besteht aus einem Substrat 31 mit einer Oberfläche 32, auf der kollimierende Elemente 33 (oder auch Mikrolinsen) angeordnet sind. Die kollimierenden Elemente 33 sind dabei vorzugweise in gleicher Anzahl vorhanden wie die Strukturen 22 auf der Lichtleiterplatte 21. Jeder der Strukturen 22 ist einem der kollimierenden Elemente 33 zugeordnet. Die kollimierenden Elemente 33 sind dabei vorzugsweise derart gestaltet, dass Licht, das aus einer Struktur 22 austritt, die einem kollimierenden Element 33 zugeordnet ist, von diesem zugeordneten kollimierenden Element 33 umgelenkt und aus dem Beleuchtungssystem ausgekoppelt wird. Die kollimierenden Elemente 33 sind vorzugsweise so gestaltet, dass dabei eine Entblendung des Lichts, vorzugsweise normkonform, stattfindet. Die kollimierenden Elemente 33 haben vorzugsweise die äußere Form von oben abgeschnittenen Kegeln mit kreisförmiger Grundfläche oder oben abgeschnittenen Pyramiden mit rechteckiger oder quadratischer Grundfläche. Kollimierende Elemente verschiedener Formen können in einer Entblendungseinheit 3 kombiniert sein. Auf der durch den Abschnitt entstehenden Oberfläche eines jeden kollimierenden Elements ist eine Öffnung 33a zum vollständigen Aufnehmen der Strukturen 22 ausgebildet. Die tiefe jeder Öffnung 33a entspricht vorzugsweise wenigstens der Höhe der dem kollimierenden Element zugeordneten Struktur 22.

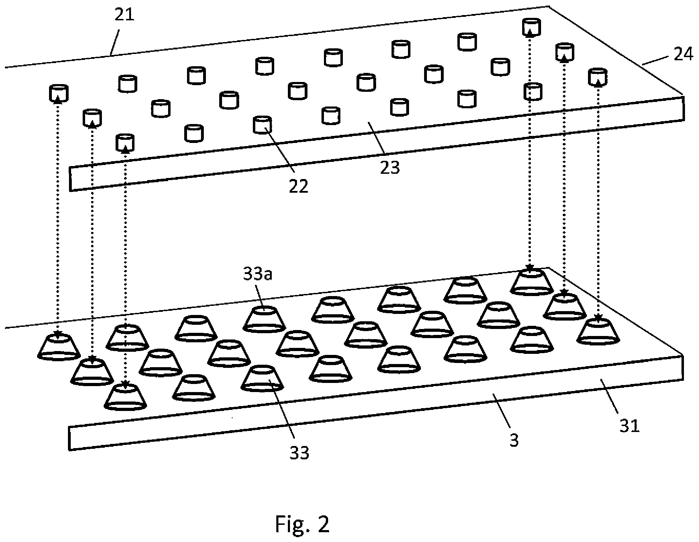

Figur 2 zeigt in einer Explosionsansicht eine perspektivische Darstellung eines erfindungsgemäßen Beleuchtungssystems 1. Die Figur 2 zeigt, wie die Strukturen 22 auf der Oberfläche 23 der Lichtleiterplatte 21 verteilt sein können. Die Verteilung der kollimierenden Elemente 33 auf der Oberfläche 32 des Substrats 31 ist vorzugsweise entsprechend der Verteilung der Strukturen 22 gewählt. Jedem kollimierenden Element 33 kann eine Struktur 22 zugeordnet sein und jedes kollimierende Element 33 empfängt vorzugsweise nur Licht, das aus der ihm zugeordneten Struktur 22 austritt.

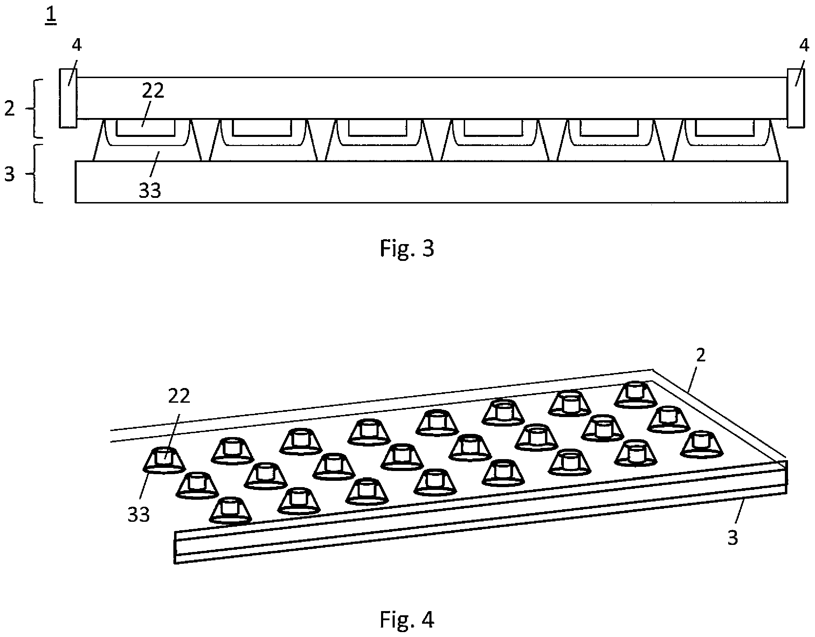

Figur 3 und 4 zeigen das Beleuchtungssystem 1 der vorliegenden Erfindung in zusammengefügtem Zustand. Dabei ist zu erkennen, dass die Entblendungseinheit 3 vorzugsweise so an der Lichtleitereinheit 2 angebracht ist, dass die Strukturen 22 in die Öffnungen 33a der kollimierenden Elemente 33 hineinragen. Genauer gesagt ragt dann jede Struktur 22 in die Öffnung 33a des dieser Struktur 22 zugeordneten kollimierenden Elements 33 hinein. Vorteilhafterweise ragt jede Struktur 22 soweit in die Öffnung 33a des entsprechenden kollimierenden Elements 33 hinein, dass jede Struktur 22 vollständig von dem zugeordneten kollimierenden Element 33 aufgenommen wird, d.h. ganz umschlossen wird. Das bedeutet, dass jede Struktur 22 vollständig in das ihr zugeordnete kollimierende Element eintaucht. Dadurch tritt an den Flanken 22a einer Struktur 22 austretendes Licht zwangsläufig in die entsprechenden kollimierenden Elemente 33 ein und kann nicht zwischen zwei kollimierende Elemente 33 gelangen.

Licht, das von wenigstens einer Lichteinheit 4 in die Lichtleiterplatte 21 eingeleitet wird, wird solange in der Lichtleiterplatte 21 durch Totalreflexion fortgeleitet, bis es in eine der Strukturen 22 eintritt und auf eine Flanke 22a dieser Struktur 22 trifft. Dann wird das Licht aus der Lichtleitereinheit 2 ausgegeben und tritt in ein kollimierendes Element 33 der Entblendungseinheit 3 ein. Im kollimierenden Element 33 wird das Licht durch Totalreflexion derart umgelenkt, dass es aus der Entblendungseinheit 3 und somit aus dem Beleuchtungssystem 1 austritt. Die Umlenkung im kollimierenden Element 33 erfolgt dabei vorzugsweise auf eine Weise, dass lichttechnischen Kriterien (bspw. eine vorgegebene Lichtverteilung, Bedingungen des UGR, oder eine BAP-Tauglichkeit) eingehalten werden. Die kollimierenden Elemente 33 sind entsprechend geformt und gestaltet. Mit dem erfindungsgemäßen Beleuchtungssystem 1 ist es möglich, insgesamt höhere Lichtmengen zu erzeugen.

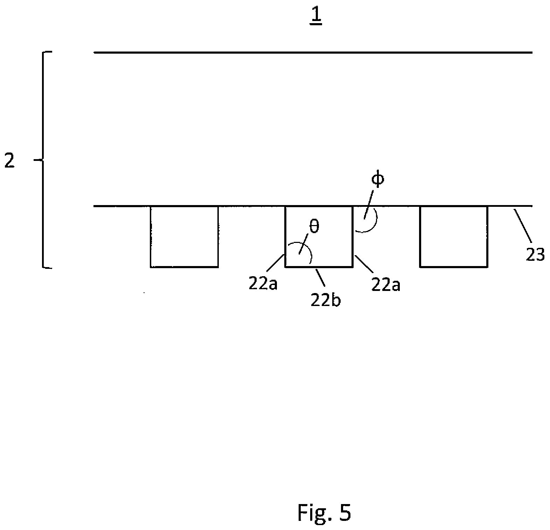

Figur 5 zeigt im Detail eine vorteilhafte Gestaltung der Strukturen 22 auf der Lichtleiterplatte 21. Die Strukturen 22 sind wie beschrieben entweder zylinderartig, würfelartig oder quaderartig. Dabei sind vorzugsweise sämtliche Übergänge zwischen jeder Struktur 22 und der Lichtleiterplatte 21 sowie innerhalb jeder Struktur 22 rechtwinklig. D.h. ein Winkel ϕ zwischen der Flanke 22a und der Oberfläche 23 der Lichtleiterplatte 21 ist vorzugsweise etwa 90°. Genauso ist ein Winkel θ zwischen der Flanke 22a und der Bodenfläche 22b einer Struktur 22 etwa 90°. Nicht kontrollierbare Strahlen werden somit minimiert. Dadurch wird die Lichtmenge der durch die Entblendungseinheit 3 kontrollierbaren Strahlen maximiert und es ist möglich, insgesamt höhere Lichtmengen zu erzeugen.

Um ein gleichmäßiges Erscheinungsbild des Beleuchtungssystems 1 zu gewährleisten, ist es vorteilhaft, den Wirkungsquerschnitt der Strukturen 22 auf der Lichtleiterplatte 21 in Abhängigkeit von einer Entfernung zu wenigstens einer Lichteinleitseite festzulegen.

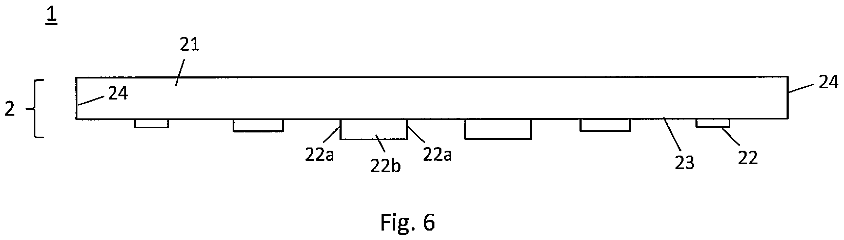

Figur 6 zeigt zum Beispiel, dass Strukturen 22, die sich angrenzend oder nahe einer der Seitenflächen 24 befinden, an denen Licht in die Lichtleiterplatte 21 eingekoppelt wird, kleiner sind als Strukturen 22, die in der Mitte zwischen den zwei Seitenflächen 24 angeordnet sind. Falls nur an einer Seitenfläche 24 Licht eingeleitet wird, sollten vorzugsweise die Strukturen 22 nahe dieser Seitenfläche 24 kleiner sein, als Strukturen 22 entfernt dieser Seitenfläche 24. Die Größe einer Struktur 22 bestimmt sich durch ihre Grundfläche (bei einer Zylinderform ist diese beschreibbar durch den Radius) und/oder ihre Höhe. Das bedeutet für das erste Beispiel, dass Strukturen 22 in der Symmetriemitte der Lichtleiterplatte 21 eine größere Grundfläche und/oder eine größere Höhe aufweisen.

Vorzugsweise sind alle kollimierenden Elemente 33 gleich groß, d.h. haben dieselbe Grundfläche und Höhe. Die kollimierenden Elemente 33 sind dabei vorzugsweise derart gestaltet, dass sie die größten der unterschiedlichen Strukturen 22 gerade noch aufnehmen können. Es ist aber auch möglich, verschieden große kollimierende Elemente 33 auf der Entblendungseinheit 3 anzuordnen. Durch kleinere Strukturen 22 wird weniger Licht in das entsprechend zugeordnete kollimierende Element 33 geleitet. Dadurch kann der Lichtabfall in der Lichtleiterplatte 21 von den Seitenflächen 24 hin bis zur Mitte zwischen den Seitenflächen 24 ausgeglichen werden. Ohne den Ausgleich würde mehr Licht aus Strukturen 22 nahe den Seitenflächen 24 austreten.

Eine andere Möglichkeit die Lichtabgabe gleichmäßig zu halten ist anstatt der Größe der Strukturen 22, deren Anordnungsdichte auf der Lichtleiterplatte 21 zu verändern. Zum Beispiel kann die Anordnungsdichte der Strukturen 22 mit zunehmendem Abstand der Strukturen 22 zu einer der Seitenflächen 24 bis zur Mitte hin größer werden. Dies gilt für einen Fall, in dem an beiden Seitenflächen 24 Licht eingeleitet wird. Nahe der beiden Seitenflächen 24 sind die Strukturen 22 weniger dicht angeordnet, es befinden sich also weniger Strukturen 22 auf gleicher Fläche. In der Mitte zwischen den beiden Seitenflächen 24, d.h. in der Symmetriemitte des Beleuchtungssystems 1, befinden sich dafür mehr Strukturen 22 auf gleicher Fläche, die Anordnungsdichte ist also höher. Auch so könnte Licht verstärkt aus der Symmetriemitte der Lichtleitereinheit 2 austreten, was wie oben beschrieben dem Lichtabfall in der Lichtleiterplatte 21 entgegenwirkt. Die kollimierenden Elemente 33 auf der Entblendungseinheit 3 könnten entsprechend den unterschiedlich dicht angeordneten Strukturen 22 ebenso unterschiedlich dicht angeordnet sein.

Durch die beschriebenen Anordnungen der Strukturen 22 auf der Lichtleiterplatte 21 kann die Leuchtdichteverteilung des Beleuchtungssystems 1 leicht beeinflusst werden. Die Leuchtdichteverteilung kann auch leicht nachträglich geändert werden, d.h. nach Auslieferung des Beleuchtungssystems. Es ist auch denkbar, dass innerhalb eines Beleuchtungssystems 1 unterschiedliche Lichtleiterplatten 21 aneinander gereiht werden. Verschiedene Lichtleiterplatten 21 können dabei Strukturen 22 mit unterschiedlicher Grundfläche und/oder Höhe oder unterschiedliche Anordnungsdichten von Strukturen 22 aufweisen. So kann ein Beleuchtungssystem 1 zielgerichtet auf eine gewünschte Leuchtdichteverteilung angepasst werden. Licht kann beispielweise gezielt auf Arbeitsplätze gerichtet werden.

Durch die Strukturen 22, die über ihre Bodenflächen 22b kein Licht austreten lassen, sondern Licht nur aus den Flanken 22a austreten lassen, werden nicht kontrollierbare Lichtstrahlen, welche in die kollimierenden Elemente 33 eintreten, weitgehend vermieden. Zudem wird Licht von den Bodenflächen 22b in die Lichtleiterplatte 21 zurückreflektiert und ist deshalb nicht verloren. Mit Hilfe der kollimierenden Elemente 33 ist es möglich, höhere Lichtmengen zu erzielen, die aus dem Beleuchtungssystem 1 austritt. Durch die Anpassung der Größe oder der Verteilung der Strukturen 22 kann zudem eine gleichmäßige Abgabe von normkonform entblendetem Licht erzielt werden.

Alle Einheiten des Beleuchtungssystems 1 lassen sich hochwertig und präzise herstellen, bspw. durch Laserstrukturierung. Die Hochwertigkeit ist im Vergleich zum Stand der Technik nicht schlechter.

## Patentansprüche

1. Beleuchtungssystem (1) zur gleichmäßigen Lichtabgabe, mit einer Lichtleitereinheit (2);
die Lichtleitereinheit (2) umfasst:
eine Lichtleiterplatte (21);
mehrere auf der Lichtleiterplatte (21) angeordnete Strukturen (22) zum Auskoppeln von Licht aus der Lichtleiterplatte (21),
wobei die Strukturen (22) quaderartig und/oder zylinderartig und derart gestaltet sind, dass Licht nur an Flanken (22a) der Strukturen (22) austreten kann;
wobei das Beleuchtungssystem (1) zusätzlich umfasst:
wenigstens eine an einer Seitenfläche (24) der Lichtleiterplatte (21) angebrachte Lichteinheit (4) zum Einleiten von Licht in die Lichtleiterplatte (21); und
eine Entblendungseinheit (3), die an der Lichtleitereinheit (2) angebracht ist und auf der mehrere kollimierende Elemente (33) angeordnet sind;
wobei jeder Struktur (22) ein kollimierendes Element (33) zugeordnet ist; und
wobei jedes kollimierende Element (33) dazu ausgelegt ist, Licht, das an den Flanken (22a) der ihm zugeordneten Struktur (22) austritt, durch Totalreflexion umzulenken, so dass es aus dem Beleuchtungssystem (1) austritt;
wobei jedes kollimierende Element (33) eine Öffnung (33a) aufweist; und jede Struktur (22) in das ihr zugeordnete kollimierende Element (33) hineinragt, wobei jede Struktur (22) vollständig in dem ihr zugeordneten kollimierenden Element (33) aufgenommen ist,
und wobei die kollimierenden Elemente (33) die äußere Form von oben abgeschnittenen Kegeln mit kreisförmiger Grundfläche oder oben abgeschnittenen Pyramiden mit rechteckiger Grundfläche haben, wobei auf der durch den Abschnitt entstehenden Oberfläche eines jeden kollimierenden Elements eine Öffnung (33a) zum vollständigen Aufnehmen der Strukturen (22) ausgebildet ist.

2. Beleuchtungssystem (1) gemäß Anspruch 1, wobei
jede Struktur (22) derart gestaltet ist, dass Licht, das auf eine Bodenfläche (22b) der Struktur (22) trifft, reflektiert wird.

3. Beleuchtungssystem (1) gemäß Anspruch 2, wobei jede Struktur (22) derart gestaltet ist, dass,
ein erster Winkel (ϕ) zwischen der Flanke (22a) der Struktur (22) und einer Oberfläche (23) der Lichtleiterplatte (21) etwa 90° beträgt, und
ein zweiter Winkel (θ) zwischen der Flanke (22a) der Struktur (22) und der Bodenfläche (22b) der Struktur (22) etwa 90° beträgt.

4. Beleuchtungssystem (1) gemäß einem der Ansprüche 1 bis 3, wobei
eine Seitenfläche (24) der Lichtleiterplatte (21) zum Einleiten von Licht in die Lichtleiterplatte (21) ausgelegt ist, und
eine Höhe und/oder eine Grundfläche der Strukturen (22) mit zunehmendem Abstand der Strukturen (22) von der Seitenfläche (24) zunehmen.

5. Beleuchtungssystem (1) gemäß einem der Ansprüche 1 bis 3, wobei
zwei gegenüberliegende Seitenflächen (24) der Lichtleiterplatte (21) zum Einleiten von Licht in die Lichtleiterplatte (21) ausgelegt sind, und
eine Höhe und/oder eine Grundfläche von Strukturen (22), die angrenzend an eine der Seitenflächen (24) angeordnet sind, kleiner ist als eine Höhe und/oder eine Grundfläche von Strukturen (22), die in der Mitte zwischen den beiden Seitenflächen (24) angeordnet sind.

6. Beleuchtungssystem (1) gemäß Anspruch 5, wobei
die Höhe und/oder die Grundfläche der Strukturen (22) mit zunehmendem Abstand der Strukturen (22) von einer der Seitenflächen (24) bis zur Mitte zwischen den beiden Seitenflächen (24) hin zunehmen.

7. Beleuchtungssystem (1) gemäß einem der Ansprüche 1 bis 6, wobei
jede Struktur (22) von dem ihr zugeordneten kollimierenden Element (33) optisch entkoppelt ist.

8. Beleuchtungssystem (1) gemäß einem der Ansprüche 1 bis 7, wobei jede Lichteinheit (25) wenigstens eine LED aufweist.

## Claims

1. Lighting system (1) for uniform light output, with a light guide unit (2);
the light guide unit (2) comprises:
a light guide plate (21);
several structures (22) arranged on the light guide plate (21) for decoupling light from the light guide plate (21),
wherein the structures (22) are cuboid-like and/or cylinder-like and designed in such a way that light can only exit at flanks (22a) of the structures (22);
wherein the lighting system (1) additionally comprises:
at least one light unit (4) mounted on a side surface (24) of the light guide plate (21) for the introduction of light into the light guide plate (21); and
a glare suppression unit (3) which is mounted on the light guide unit (2) and on which are arranged several collimating elements (33);
wherein to each structure (22) is assigned a collimating element (33); and wherein each collimating element (33) is designed to deflect, by total reflection, light that exits at the flanks (22a) of the structure (22) assigned to it so that the light exits the lighting system (1);
wherein each collimating element (33) comprises an opening (33a); and each structure (22) projects into the collimating element (33) assigned to it, wherein each structure (22) is completely accommodated in the collimating element (33) assigned to it,
and wherein the collimating elements (33) have the outer shape of cones cut off at the top with a circular base surface or of pyramids cut off at the top with a rectangular base surface, wherein an opening (33a) for completely accommodating the structures (22) is formed on the surface, produced by the cut, of each collimating element.

2. Lighting system (1) according to claim 1, wherein
each structure (22) is designed in such a way that light impinging on a bottom surface (22b) of the structure (22) is reflected.

3. Lighting system (1) according to claim 2, wherein each structure (22) is designed in such a way that
a first angle (ϕ) between the flank (22a) of the structure (22) and a surface (23) of the light guide plate (21) is approximately 90°, and
a second angle (θ) between the flank (22a) of the structure (22) and the bottom surface (22b) of the structure (22) is approximately 90°.

4. Lighting system (1) according to one of claims 1 to 3, wherein
a side surface (24) of the light guide plate (21) is designed to introduce light into the light guide plate (21), and
a height and/or a base surface of the structures (22) increase with increasing distance of the structures (22) from the side surface (24).

5. Lighting system (1) according to one of claims 1 to 3, wherein two opposite side surfaces (24) of the light guide plate (21) are designed to introduce light into the light guide plate (21), and
a height and/or a base surface of structures (22) arranged adjacently to one of the side surfaces (24) is smaller than a height and/or a base surface of structures (22) arranged in the center between the two side surfaces (24).

6. Lighting system (1) according to claim 5, wherein
the height and/or the base surface of the structures (22) increase with increasing distance of the structures (22) from one of the side surfaces (24) up to the center between the two side surfaces (24).

7. Lighting system (1) according to one of claims 1 to 6, wherein
each structure (22) is optically decoupled from the collimating element (33) assigned to it.

8. Lighting system (1) according to one of claims 1 to 7, wherein each light unit (25) comprises at least one LED.

## Revendications

1. Système d'éclairage (1) pour une émission de lumière uniforme, muni d'une unité de guidage de lumière (2) ;
l'unité de guidage de lumière (2) comprend :
un panneau de guidage de lumière (21) ;
plusieurs structures (22) disposées sur le panneau de guidage de lumière (22) pour découpler la lumière du panneau de guidage de lumière (21),
les structures (22) étant parallélépipédiques et/ou cylindriques et étant conçues de sorte que la lumière ne puisse être émise que sur les flancs (22a) des structures (22) ;
le système d'éclairage (1) comprenant également :
au moins une unité de lumière (4) appliquée sur une surface latérale (24) du panneau de guidage de lumière (21) destinée à introduire de la lumière dans le panneau de guidage de lumière (21) ; et
une unité anti-éblouissement (3) montée sur l'unité de guidage de lumière (2) et sur laquelle sont disposés plusieurs éléments de collimation (33) ;
un élément de collimation (33) étant affecté à chaque structure (22) ; et chaque élément de collimation (33) étant agencé pour réorienter la lumière, qui est émise sur les flancs (22a) de la structure (22) qui lui est affectée, par réflexion totale, de manière à ce qu'elle sorte du système d'éclairage (1) ;
chaque élément de collimation (33) présentant une ouverture (33 a) ; et chaque structure (22) fait saillie dans l'élément de collimation (33) qui lui est affecté, chaque structure (22) étant complètement incluse dans l'élément de collimation (33) qui lui est affecté,
et les éléments de collimation (33) ayant la forme extérieure de cônes tronqués par le haut avec une surface de base circulaire ou de pyramides tronquées par le haut avec une surface de base rectangulaire, une ouverture (33a) étant formée à la surface résultante de la section de chaque élément de collimation pour l'inclusion complète des structures (22).

2. Système d'éclairage (1) selon la revendication 1, dans lequel
chaque structure (22) est conçue de sorte que la lumière, qui est incidente sur une surface de fond (22b) de la structure (22), est reflétée.

3. Système d'éclairage (1) selon la revendication 2, dans lequel chaque structure (22) est conçue de sorte qu'
un premier angle (ϕ) entre le flanc (22a) de la structure (22) et une surface (23) du panneau de guidage de lumière (21) est d'environ 90° et
un deuxième angle (9) entre le flanc (22a) de la structure (22) et la surface de fond (22b) de la structure (22) est d'environ 90°.

4. Système d'éclairage (1) selon l'une quelconque des revendications 1 à 3, dans lequel
une surface latérale (24) du panneau de guidage de lumière (21) est agencé pour introduire de la lumière dans le panneau de guidage de lumière (21), et
une hauteur et/ou une surface de base des structures (22) augmente à mesure que la distance des structures (22) à la surface latérale (24) augmente.

5. Système d'éclairage (1) selon l'une quelconque des revendications 1 à 3, deux surfaces latérales opposées (24) du panneau de guidage de lumière (21) étant agencées pour introduire de la lumière dans le panneau de guidage de lumière (21), et
une hauteur et/ou une surface de base de structures (22), qui sont disposées de manière adjacente sur l'une des surfaces latérales (24), est inférieure à une hauteur et/ou une surface de base de structures (22) qui sont disposée au milieu entre les deux faces latérales (24).

6. Système d'éclairage (1) selon la revendication 5,
la hauteur et/ou la surface de base des structures (22) augmentant à mesure que la distance des structures (22) depuis l'une des surfaces latérales (24) jusqu'au milieu entre les deux surfaces latérales (24) augmente.

7. Système d'éclairage (1) selon l'une quelconque des revendications 1 à 6,
chaque structure (22) étant optiquement découplée de l'élément de collimation (33) qui lui est affecté.

8. Système d'éclairage (1) selon l'une quelconque des revendications 1 à 7, chaque unité de lumière (25) présentant au moins une DEL.
